Europäisches Patentamt

European Patent Office

Office européen des brevets

(19)

(11) **EP 0 776 476 B1**

(12) **FASCICULE DE BREVET EUROPEEN**

(45) Date de publication et mention
de la délivrance du brevet:
**12.12.2001 Bulletin 2001/50**

(21) Numéro de dépôt: **96922919.4**

(22) Date de dépôt: **13.06.1996**

(51) Int Cl.⁷: **G01P 15/08**

(86) Numéro de dépôt international:
**PCT/FR96/00904**

(87) Numéro de publication internationale:
**WO 97/00451 (03.01.1997 Gazette 1997/02)**

(54) **ACCELEROMETRE DU TYPE A COMPENSATION DE L'EFFET DE LA PESANTEUR ET PROCEDE DE REALISATION D'UN TEL ACCELEROMETRE**

BESCHLEUNIGUNGSMESSAUFNEHMER MIT MITTELN ZUR KOMPENSATION DES GEWICHTS UND VERFAHREN ZU SEINER HERSTELLUNG

GRAVITY-COMPENSATED ACCELEROMETER AND METHOD FOR MAKING SAME

(84) Etats contractants désignés:
**DE FR GB IT**

(30) Priorité: **14.06.1995 FR 9507077**

(43) Date de publication de la demande:
**04.06.1997 Bulletin 1997/23**

(73) Titulaire: **COMMISSARIAT A L'ENERGIE ATOMIQUE**
**75015 Paris (FR)**

(72) Inventeurs:
• **BRUN, Jean**
**F-38800 Champagnier (FR)**
• **CAPLET, Stéphane**
**F-38700 Corenc (FR)**
• **TOURET, Patricia**
**F-38130 Echirolles (FR)**

• **RUZIE, Gérard**
**F-91410 Dourdan (FR)**

(74) Mandataire: **Dubois-Chabert, Guy et al**
**BREVATOME**
**3, rue du Docteur Lanceraux**
**75008 Paris (FR)**

(56) Documents cités:
| WO-A-89/12830 | DE-A- 3 740 688 |
| US-A- 4 494 409 | US-A- 5 129 983 |
| US-A- 5 209 117 | US-A- 5 241 864 |

• SENSORS AND ACTUATORS A, vol. A37/38, 1 Juin 1993, pages 86-90, XP000411380 VERGOTE S ET AL: "A COMPOSITE MEMBRANE MOVEMENT DETECTOR WITH DEDICATED INTERFACE ELECTRONICS FOR ANIMAL ACTIVITY TRACKING"

**Description**

La présente invention concerne un accéléromètre du type à compensation de l'effet de la pesanteur. La compensation de l'effet de la pesanteur sur la masse sismique d'un accéléromètre permet d'améliorer sa sensibilité à une variation d'accélération.

L'invention s'applique tout particulièrement aux dispositifs de faibles dimensions. Sa nature fait que cet accéléromètre peut être élaboré par des technologies relevant de la mécanique, de la micromécanique ou de la microélectronique (par exemple le micro-usinage).

Le domaine principal d'application d'un accéléromètre selon la présente invention est l'étude du mouvement ou du comportement des milieux soumis à la gravité (la sismologie par exemple).

L'invention permet donc de concevoir des accéléromètres de type monolithique à compensation de l'effet de la pesanteur alors que les accéléromètres de type monolithique selon l'art connu ne permettent pas cette compensation. De tels accéléromètres selon l'art connu sont par exemple décrits dans l'article "Development of micromachined silicon accelerometer" de M. Ueda, H. Inada, Y. Mine et K. Sunago, paru dans la revue Sumitomo Electric Technical Review, N° 38, Juin 1994, pages 72-77 et dans l'article "Small inertial measurements units-sources of error and limitations on accuracy" de Michael E. Hoenk, paru dans la revue SPIE, vol. 2220, pages 15-26.

La méthode la plus couramment employée pour mesurer l'accélération consiste à mesurer non pas directement l'accélération elle-même, mais la force F à laquelle est soumise une masse M sous l'action de l'accélération $\gamma$ considérée. De la loi fondamentale de la dynamique $F = M.\gamma$ , connaissant la valeur de M et en mesurant la force F, on en déduit la valeur de l'accélération.

Un capteur d'accélération du type le plus courant se compose donc d'une masse inerte, ou masse sismique, généralement supportée par un ou plusieurs ressorts. Lorsque cette masse subit des variations d'accélération, celle-ci se déplace et les ressorts se déforment. Le système revient à sa position initiale dès lors que la force due à l'accélération s'annule.

Au repos, un capteur d'accélération horizontale n'est sensible à aucun effort perturbateur. En revanche, un accéléromètre à axe sensible vertical subit une force minimale équivalente à la force due à la pesanteur $F = M.g$ , g étant la constante gravitationnelle.

Cette force minimale due à la pesanteur constitue un inconvénient lorsqu'on cherche à mesurer des accélérations verticales très faibles (inférieures à $10^{-6}$ G). Il est donc important dans ce cas de compenser l'effort dû à la pesanteur par une force dirigée dans le sens opposé à la force de pesanteur. A l'heure actuelle, on compte deux familles de procédés de compensation de la force de pesanteur :

-   les procédés faisant intervenir une source d'énergie électrique. Un champ électromagnétique ou électrostatique maintient la masse sismique en suspension. Ces procédés nécessitent un système d'asservissement complexe,
-   les procédés mettant en oeuvre la force de rappel d'un ressort. La masse est maintenue en équilibre, suspendue par un ressort prédéformé.

Il existe également des systèmes mixtes, utilisant à la fois une force d'origine électrostatique ou électromagnétique et la force de rappel d'un ressort. Un tel système est par exemple décrit dans l'article "The effects of spring and magnetic distortions on electromagnetic geophones" de Shi Jung Chen et Kuan Chen, paru dans J. Phys. E : Sci. Instrum. 21 (1988), pages 943-947.

Ces techniques apportent d'autres inconvénients.

Dans le cas des dispositifs électrostatiques ou électromagnétiques, la présence d'un système d'asservissement électronique peut générer des bruits parasites incompatibles à la sensibilité désirée. Par ailleurs, une compensation seulement électrostatique conduit à une instabilité du système qui rend son asservissement difficile.

Les capteurs à axe sensible vertical pour lesquels l'effet de la pesanteur sur la masse sismique est compensé par un ressort sont actuellement réalisés par assemblage de différentes pièces mécaniques. Un tel capteur est par exemple décrit dans l'article "The leaf-spring seismometer : design and performance" de E. Wielandt et G. Streckeisen, paru dans Bulletin of Seismological Society of America, Vol. 72, n° 6, pages 2349-2367, Décembre 1982. En raison de leur construction, ces dispositifs ne présentent pas un facteur de qualité Q très élevé. Ce paramètre structural est relié à la densité de bruit brownien S du dispositif par la relation suivante :

$$S = \sqrt{\frac{4\, k_b\, T\, \omega_\tau}{M Q \left[ (\omega^2 - \omega_\tau^2)^2 + \dfrac{\omega^2\, \omega_\tau^2}{Q^2} \right]}}$$

avec :

> $\omega$, la pulsation
> $\omega_\gamma$, la pulsation de résonance
> $k_b$ , la constante de Boltzman
> T , la température
> M , la masse sismique.

Pour plus de détails sur cette relation, on se reportera à l'article : "Small inertion measurement units-sources of error and limitations on accuracy" cité plus haut. La relation montre que S est inversement proportionnel à Q et M.

Pour conserver un bruit brownien qui ne perturbe pas la mesure, les dispositifs actuels ont une masse M importante. Néanmoins, cette solution limite la miniaturisation de l'ensemble. Les appareils performants (par exemple ceux capables de détecter une variation de quelques nano-G sous 1 G) les plus petits pèsent donc plusieurs kilogrammes et occupent un volume de quelques dizaines de cm$^3$.

En conclusion, les capteurs d'accélération à axe vertical actuels sont soit peu sensibles, soit lourds et encombrants. La miniaturisation d'un dispositif performant exige de diminuer la masse sismique M et donc d'augmenter le facteur de qualité. Cela peut être obtenu en réalisant l'ensemble du capteur (la masse sismique et le ressort dans le cas d'une compensation de la pesanteur par un ressort), en un matériau ayant un facteur de qualité élevé comme par exemple le silicium monocristrallin. Néanmoins, la réalisation d'un dispositif compact comportant un ressort solidaire de la masse pose des difficultés technologiques. En effet, il est difficile de rendre solidaire des petites pièces mécaniques, comme le ressort et la masse sismique, par des moyens mécaniques tels que des vis ou par de la colle sans provoquer des zones où les frottements internes sont importants et provoquent des phénomènes d'amortissement préjudiciables au facteur de qualité. Il faut en outre préserver une grande souplesse au ressort, cette souplesse influant sur la sensibilité du capteur.

La technique de compensation de la force de pesanteur proposée par la présente invention s'apparente à la famille des capteurs dont la masse sismique est supportée par un ressort. Cette solution a comme avantage de diminuer les bruits parasites produits par le système d'asservissement nécessaire aux autres dispositifs. La technique de compensation proposée est basée sur le principe d'un ressort en forme de lame réalisé par précontrainte d'une surface d'un élément (une poutre par exemple) supportant la masse sismique.

L'invention a donc pour objet un accéléromètre comportant une masse sismique susceptible d'être soumise à une force induite par une accélération à mesurer, la masse sismique étant reliée à un support par des moyens de liaison mécanique susceptibles de fléchir sous l'effet de ladite force, des moyens de détection étant prévus pour permettre de déterminer l'accélération à partir de la force induite dans la masse sismique, des moyens de compensation étant prévus pour compenser la force exercée sur la masse sismique par la pesanteur, caractérisé en ce que les moyens de liaison mécanique comportent au moins une partie constituant lesdits moyens de compensation en induisant, dans ces moyens de liaison mécanique, une précontrainte s'opposant à la force exercée sur la masse sismique par la pesanteur.

Les moyens de compensation de la force exercée sur la masse sismique par la pesanteur peuvent être constitués par une couche superficielle déposée sur les moyens de liaison mécanique, cette couche superficielle étant réalisée sur une face des moyens de liaison mécanique de manière à s'opposer à la force exercée par la pesanteur sur la masse sismique et étant en une matière présentant les propriétés requises pour exercer une contrainte sur lesdits moyens de liaison mécanique.

Dans ce cas, ladite matière présentant une contrainte peut être choisie parmi le groupe de matières constitué par le chrome, le molybdène, le tungstène, un de leurs alliages ou une céramique du type PZT.

Les moyens de compensation de la force exercée sur la masse sismique par la pesanteur peuvent être constitués par deux dépôts superficiels que présentent les moyens de liaison mécanique, ces dépôts superficiels étant réalisés sur deux faces opposées des moyens de liaison mécanique, l'un des deux dépôts étant réalisé en une matière induisant une contrainte en tension et l'autre dépôt induisant une contrainte en compression, la combinaison de ces deux dépôts induisant un gradient de contrainte dans l'épaisseur des moyens de liaison mécanique s'opposant à la force exercée sur la masse sismique par la pesanteur.

Dans ce cas, les deux dépôts peuvent être constitués de couches minces de molybdène déposées par des techniques différentes de façon à leur conférer des contraintes de signes opposés.

Selon une variante de réalisation, les moyens de compensation de la force exercée sur la masse sismique par la pesanteur peuvent être constitués par une modification superficielle des moyens de liaison mécanique, cette modification superficielle induisant ladite précontrainte dans les moyens de liaison mécanique.

Cette modification superficielle peut avantageusement consister en un dopage superficiel de la matière constituant les moyens de liaison mécanique.

Dans ce cas, les moyens de liaison mécanique étant en silicium monocristallin, l'une des faces des moyens de liaison mécanique peut être dopée par un dopant choisi dans le groupe constitué par le phosphore, le bore, le xénon, le titane, l'arsenic et l'argon.

Le dopage superficiel peut être réalisé sur deux faces opposées des moyens de liaison mécanique, chacune de ces deux faces étant dopées par des dopants différents, l'un des dopants induisant une contrainte en extension et l'autre induisant une contrainte en compression avec pour résultat d'induire un gradient de contrainte dans l'épaisseur des moyens de liaison mécanique s'opposant à la force exercée sur la masse sismique par la pesanteur.

Si les moyens de liaison mécanique sont en silicium, l'une des faces des moyens de liaison mécanique peut être dopée par du bore et l'autre face peut être dopée par de l'argon.

Les moyens de liaison mécanique peuvent être constitués d'une ou de plusieurs poutres.

Une telle conception permet de réaliser la masse sismique, les moyens de liaison mécanique et le support sous forme d'un ensemble monolithique. Ainsi, contrairement aux accéléromètres de type monolithique de l'art connu, l'invention permet d'obtenir un accéléromètre à compensation de la force de la pesanteur, de type monolithique.

L'invention a donc également pour objet un procédé de fabrication d'un accéléromètre comportant une masse sismique reliée à un support par des moyens de liaison mécanique susceptibles de fléchir sous l'effet d'une force induite dans la masse sismique par une accélération à mesurer, des moyens de compensation étant prévus pour compenser la force exercée sur la masse sismique par la pesanteur, qui comporte les étapes suivantes :

- masquage de l'une des faces principales d'un substrat, ou première face, pour y délimiter la masse sismique et le support,
- gravure du substrat à partir de la première face en direction de la face principale opposée, ou seconde face, jusqu'à laisser subsister une membrane entre le fond de la gravure et la seconde face, la gravure délimitant la masse sismique et le support,
- masquage de la seconde face du substrat pour masquer le support, la masse sismique et les moyens de liaison mécanique,
- gravure du substrat à partir de la seconde face pour ouvrir la membrane dans ses parties non masquées,
- traitement superficiel d'au moins une partie des moyens de liaison mécanique pour y induire une précontrainte s'opposant à la force exercée sur la masse sismique par la pesanteur et constituer ainsi lesdits moyens de compensation.

L'invention sera mieux décrite et d'autres avantages et particularités apparaîtront grâce à la description qui va suivre, donnée à titre d'exemple non limitatif, accompagnée des dessins annexés parmi lesquels :

- la figure 1 est une vue de côté d'un accéléromètre à compensation de l'effet de la pesanteur selon une première variante de l'invention,
- la figure 2 est une vue partielle et en perspective d'un accéléromètre à compensation de l'effet de la pesanteur selon une seconde variante de l'invention,
- la figure 3 est une vue partielle et en perspective d'un accéléromètre à compensation de l'effet de la pesanteur selon une troisième variante de l'invention,
- la figure 4 est une vue de dessus d'une poutre de soutien d'une masse sismique revêtue d'un dépôt contraint et gravé pour un accéléromètre selon l'invention,
- la figure 5 est une vue en perspective d'un accéléromètre selon l'invention en cours de réalisation.

Dans la suite de la description on décrira des accéléromètres comportant une masse sismique distincte de son élément de liaison mécanique à un support, cet élément de liaison pouvant être constitué par une ou plusieurs poutres. Ceci n'est pas limitatif de l'invention qui s'applique également au cas où la masse sismique ne se distingue pas de la poutre ou est confondue avec la poutre.

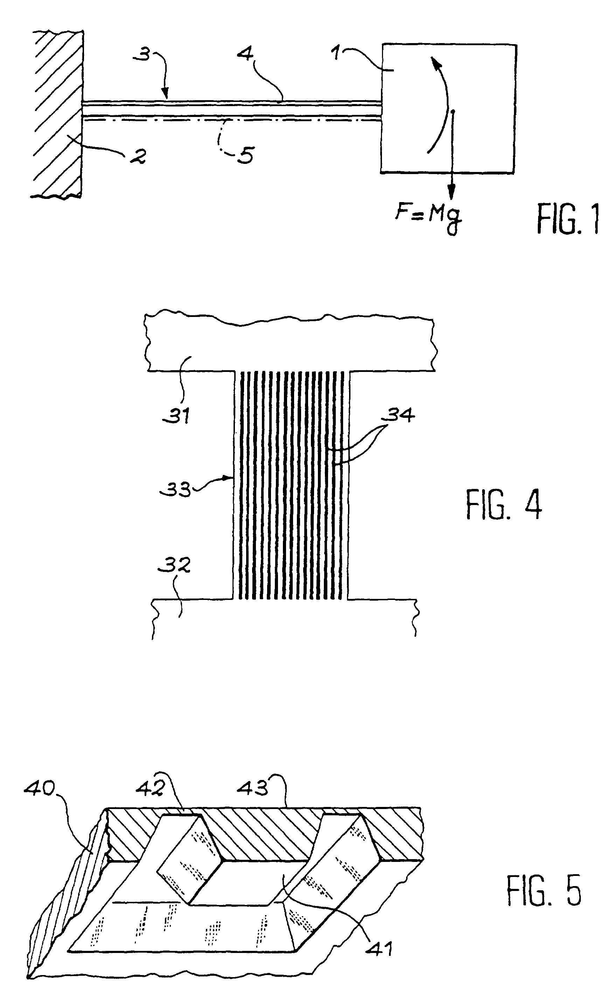

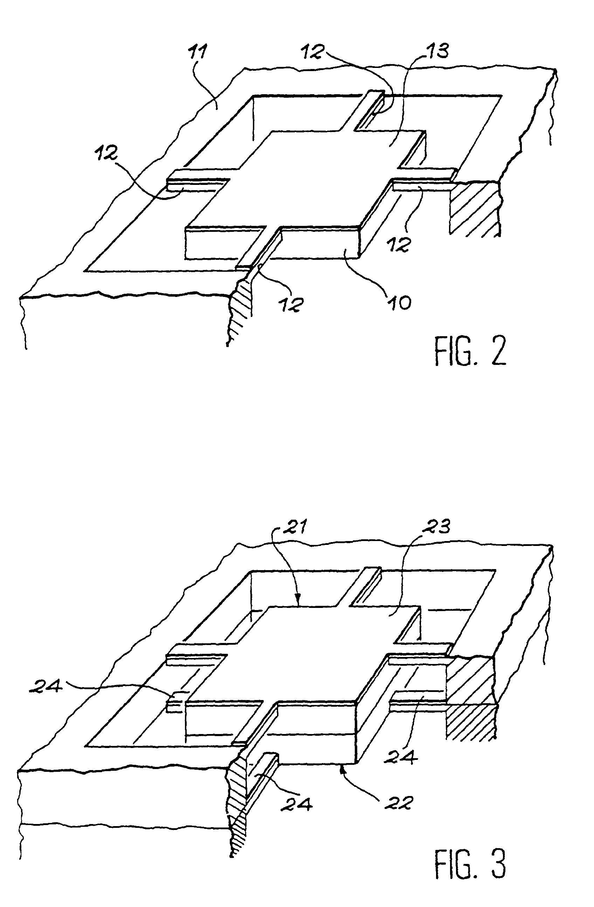

La figure 1 illustre de manière assez schématique le principe de l'invention pour un accéléromètre à axe sensible vertical. On y a représenté une masse sismique 1 de masse M, reliée à un support 2 par une poutre 3. La masse sismique 1 est donc placée en porte à faux par rapport au support 2. En négligeant la masse de la poutre 3, le centre de gravité de la masse sismique 1 est sensible à la force F à laquelle est soumise la masse sismique suite à une accélération g.

Pour compenser l'effet de la pesanteur sur la masse sismique 1, la partie superficielle supérieure 4 de la poutre 3 est traitée pour y induire une précontrainte qui a pour résultat d'exercer sur la masse sismique une force compensant celle induite par la pesanteur dans cette masse sismique.

Cette sollicitation superficielle de la poutre peut être obtenue de différentes manières. Elle peut être obtenue par le dépôt d'une couche mince sur la surface de la poutre ou par une modification de la surface de cette poutre assez importante pour produire un effet de contrainte. Ainsi traitée, la poutre tend à fléchir en exerçant une force opposée à celle de la pesanteur. Les conditions de sollicitation doivent être telles que l'extrémité de la poutre exerce une force de compensation dirigée vers le haut ainsi que le représente la flèche courbe sur la figure 1. L'effort permet alors, si l'intensité de la contrainte est suffisante, d'équilibrer la force due à la pesanteur.

Dans le cas d'une couche déposée sur la poutre, la matière de dépôt utilisable peut être choisie parmi les métaux ou leurs alliages ou encore parmi des matières connues pour présenter des contraintes comme certains matériaux piézo-électriques, par exemple la céramique de formulation $Pb(Zr_xTi_{l-x})O_3$ encore dénommée PZT. On utilise préférentiellement du chrome, du molybdène, du tungstène ou l'un de leurs alliages.

Par modification de la poutre, on entend la modification de la matière constituant la poutre elle-même, dans la zone superficielle, par un moyen approprié. Ce moyen peut être un dopage de la surface de la poutre sur une faible épaisseur. Dans ce cas, il est avantageux de choisir un dopant en fonction de la matière constituant la poutre de façon à obtenir un effet bilame entre la partie de la poutre restante et la partie dopée. Si la poutre est en silicium monocristallin, on peut utiliser un dopant choisi parmi les éléments suivants : le phosphore, le bore, le xénon, le titane, l'arsenic, l'argon.

La solution proposée par l'invention permet donc de concevoir un ressort lié à une masse sismique, formant un assemblage qui peut être de faibles dimensions, sans avoir recours à une liaison mécanique faite d'éléments distincts.

La figure 1 a illustré un accéléromètre dans sa version la plus simple, c'est-à-dire comportant une seule poutre. L'invention s'applique cependant à des accéléromètres à plusieurs poutres.

On peut appliquer le principe de l'invention à des accéléromètres comprenant deux, quatre ou huit poutres pour limiter les degrés de liberté (en translation et en rotation autour du centre de gravité) de la masse sismique au déplacement vertical. Ces poutres sont alors disposées en opposition deux à deux ou quatre à quatre selon le cas.

La figure 2 représente un tel accéléromètre. La masse sismique 10 est reliée au support 11, qui a été arasé au niveau de la masse sismique par souci de simplification, par quatre poutres 12 disposées en opposition deux à deux. Un dépôt superficiel approprié 13, recouvrant les quatre poutres 12 et également la masse sismique 10, a été effectué pour compenser la force due à la pesanteur et exerçant son action sur la masse sismique 10.

La figure 3 représente, dans le même mode d'illustration que la figure 2, un accéléromètre à huit poutres. Cet accéléromètre peut être obtenu par le scellement de deux structures 21 et 22 comportant chacune quatre poutres (c'est-à-dire étant chacune du type représenté à la figure 2). Ce scellement peut être réalisé par des méthodes de collage ou de scellement connues, par exemple par la méthode décrite dans l'article "Application of oxygen plasma processing to silicon direct bonding" de O. Zucker, W. Langheinrich, M. Kulozik et H. Goebel, paru dans la revue Sensors and Actuators A. 36, 1993, pages 227-231. Les dépôts superficiels devant exercer leur action pour compenser la force de la pesanteur, ces dépôts 23, 24 sont effectués sur les faces des poutres devant être dirigées vers le haut une fois l'accéléromètre terminé.

Les contraintes planes exercées par la couche mince déposée sur la surface d'une poutre induisent également une déformation transversale de la poutre, perpendiculairement à la direction de la première déformation. Le galbe occasionné accentue le moment d'inertie de la poutre et donc la raideur du système qui influe sur la sensibilité du capteur. Si ce phénomène est considéré comme pouvant être trop perturbant, on peut y remédier de plusieurs manières.

Une première solution consiste à effectuer un dépôt discontinu sur la poutre comme cela est représenté à la figure 4 qui est une vue de dessus et partielle d'un accéléromètre selon l'invention. On reconnaît la masse sismique 31 reliée au support 32 par la poutre 33. La face supérieure de la poutre 33 est recouverte non plus d'un dépôt continu mais de lignes parallèles 34 orientées entre la masse sismique et le support 32. Il a été démontré que, sous cette forme, la couche mince déposée tend à relaxer en partie la composante des contraintes perpendiculaires aux lignes. On peut se reporter à cet égard à l'article "Analyse par diffraction des rayons X, de l'évolution des contraintes résiduelles associée à la gravure de lignes dans un dépôt mince de tungstène CVD sur substrat de Si" de L. Maniguet, M. Ignat, M. Dupeux, J.J. Bacmann et P. Normandon, paru dans la Revue de Métallurgie-CIT/Science et Génie des Matériaux, Septembre 1993, page 1109.

Une deuxième solution consiste à exploiter l'anisotropie intrinsèque des contraintes de certaines couches minces métalliques pour orienter l'effort maximum dans le sens le plus favorable, c'est-à-dire entre la masse sismique et le support. Ces phénomènes d'anisotropie intrinsèque de contraintes ont été notamment décrits dans l'article "Internal stress tensor determination in molybdenum and molybdenum-carbon thin films deposited by D.C. magnetron sputtering" de P. Gergaud et J.J. Bacmann, paru dans la revue Materials Science Forum, vol. 133-136, 1993, pages 873-878.

La mise en oeuvre simultanée de ces deux solutions permet de cumuler les phénomènes et, dans certains cas, d'annuler la contrainte transverse.

Une troisième solution consiste à réaliser une ou plusieurs fentes longitudinales dans la poutre, ces fentes ayant une direction allant de la masse sismique au support. Dans le cas où les moyens de compensation de la force de pesanteur sont constitués par une couche superficielle déposée sur la poutre, cette couche serait fendue, de préférence sur toute son épaisseur, selon un motif ressemblant à celui de la figure 4.

La contrainte superficielle peut être exercée par un dépôt ou par un traitement qui permet de créer un gradient de contrainte dans l'épaisseur de la poutre. L'utilisation de films minces offre la possibilité de concevoir un système à deux couches soit, en se rapportant à la figure 1, une couche mince 4 et une couche mince 5 déposées en vis-à-vis de part et d'autre de la poutre. La couche mince supérieure doit agir en tension et la couche mince inférieure en compression. Certaines matières élaborées en couche mince (le molybdène par exemple) présentent des contraintes de signes opposés selon leurs conditions d'élaboration. L'article "Internal stresses in sputtered chromium" de D.W. Hoffman et J.A. Thornton, paru dans la revue Thin Solid Films, 40 (1977) pages 355-363, décrit ce phénomène dans le cas du chrome.

Par ailleurs, dans le domaine des technologies micro-électroniques, il existe des techniques de dopage qui permettent d'obtenir des contraintes de compression ou de tension selon la nature de l'élément implanté et des conditions d'implantation. Ceci est discuté dans l'article "Parallel stress and perpendicular strain depth distributions in [001] silicon amorphized by ion implantation" de R. Fabbri, M. Servidori et A. Zani, paru dans la revue J. Appl. Phys. 66 (10), 15 Novembre 1989, pages 4715-4718. Par exemple, le dopage par du bore conduit à des contraintes de tension dans le silicium alors que le dopage par de l'argon donne des contraintes de compression dans le même matériau.

Dans le cas où le matériau utilisé pour réaliser la couche mince supérieure (et exerçant une action en tension) est identique à celui utilisé pour réaliser la couche mince inférieure (et exerçant une action en compression), le coefficient de dilatation thermique de chacune de ces couches minces est très voisin, voire identique, et le système devient alors insensible à la température. Dans le cas de couches minces déposées sur deux faces en vis-à-vis d'une poutre, on utilisera de préférence le molybdène. Dans le cas de couches minces constituées par dopage du matériau constituant la poutre (du silicium par exemple), bien que les dopants de chaque face soient différents, les coefficients de dilatation thermique de chaque couche seront très proches puisque le matériau de base recevant les dopants est identique.

On va décrire maintenant, à titre d'exemple, la réalisation d'un accéléromètre selon la présente invention. On a choisi de réaliser, par une technique de micro-électronique, un accéléromètre à quatre poutres du type représenté à la figure 2. Ce capteur est fabriqué dans du silicium d'orientation <100>. Après nettoyage chimique, le silicium est recouvert d'un masque qui peut être une couche de nitrure de silicium $Si_3N_4$. En utilisant les procédés de photolithographie conventionnelle, une ouverture selon une zone délimitant la masse sismique est réalisée dans le masque. Une gravure anisotrope du silicium est alors effectuée, par exemple dans un bain d'hydroxyde de potassium KOH (cf. par exemple l'article "Develoment of micromachined silicon accelerometer" cité plus haut). Le temps de gravure est prévu suffisamment long pour obtenir une membrane de silicium de faible épaisseur autour de la masse sismique.

La figure 5 représente le résultat obtenu à l'issue de cette étape du procédé. Dans cette figure, le substrat de départ 40 est représenté en coupe. La coupe passe par la masse sismique 41 et donne une idée de l'épaisseur de la membrane 42 subsistant autour de la masse sismique 41.

La face 43 du substrat 40 située du côté de la membrane est ensuite recouverte d'une couche d'oxyde de silicium $SiO_2$. De même que précédemment ce revêtement est ouvert de façon à délimiter les côtés des poutres et le pourtour de la masse sismique. Ensuite, une technique de gravure physique (gravure plasma) dans un mélange gazeux de trichlorure de bore $BCl_3$ et de chlore $Cl_2$ permet d'éliminer le silicium de la membrane qui n'est pas masqué. Après cette opération, la masse sismique est libérée de la structure et n'est plus supportée que par les poutres. La couche d'oxyde de silicium qui subsiste est retirée par gravure plasma dans un mélange gazeux de trifluorométhane $CHF_3$ et d'oxygène $O_2$.

On procède ensuite au dépôt de la couche mince contrainte sur la lame par pulvérisation cathodique magnétron. Les paramètres d'élaboration du film métallique (en molybdène) sont ajustés de manière à produire des contraintes de tension dans le matériau.

Ainsi, ce type de structure peut être fabriqué en silicium ou en quartz grâce aux techniques de micro-usinage utilisées dans les technologies micro-électroniques. Ce mode de fabrication autorise la réalisation d'un ensemble monolithique en silicium (c'est-à-dire que toutes les parties du capteur sont usinées dans un substrat massif) dont le facteur de qualité est élevé. Il est alors possible de concevoir une masse plus faible et donc une structure plus compacte.

Dans le cas où la poutre est du type bilame, l'effort destiné à équilibrer la force de gravité est fortement affecté par la forme de la poutre. Les inventeurs de la présente invention ont constaté qu'une forme rectangulaire du bilame (lorsque la poutre est vue dans la direction de la force de gravité) est moins satisfaisante pour compenser la force de gravité qu'une forme triangulaire dont la base du triangle est encastrée dans le support et dont le sommet est solidaire de la masse sismique.

Compte tenu de la simplicité de réalisation de l'accéléromètre selon la présente invention, on peut envisager une fabrication collective des capteurs et donc de diminuer leur coût de revient. L'invention peut notamment être mise en oeuvre pour réaliser des sismomètres de faible encombrement pour qu'ils puissent être introduits dans un puits de forage.

**Revendications**

1. Accéléromètre comportant une masse sismique (1, 10) susceptible d'être soumise à une force induite par une accélération à mesurer, la masse sismique (1, 10) étant reliée à un support (2, 11) par des moyens de liaison mécanique (3, 12) susceptibles de fléchir sous l'effet de ladite force, des moyens de détection étant prévus pour permettre de déterminer l'accélération à partir de la force induite dans la masse sismique (1,10), des moyens de compensation étant prévus pour compenser la force exercée sur la masse sismique (1,10) par la pesanteur, **caractérisé en ce que** les moyens de liaison mécanique (3,12) comportent au moins une partie (4, 5, 13) constituant lesdits moyens de compensation en induisant, dans ces moyens de liaison mécanique (3,12), une précontrainte s'opposant à la force exercée sur la masse sismique (1,10) par la pesanteur.

2. Accéléromètre selon la revendication 1, **caractérisé en ce que** les moyens de compensation de la force exercée sur la masse sismique (1,10) par la pesanteur sont constitués par une couche superficielle (4, 5) déposée sur les moyens de liaison mécanique (3), cette couche superficielle (4,5) étant réalisée sur une face des moyens de liaison mécanique (3) de manière à s'opposer à la force exercée par la pesanteur sur la masse sismique (1) et étant en une matière présentant les propriétés requises pour exercer une contrainte sur lesdits moyens de liaison mécanique (3).

3. Accéléromètre selon la revendication 2, **caractérisé en ce que** ladite matière présentant une contrainte est choisie parmi le groupe de matières constitué par le chrome, le molybdène, le tungstène, un de leurs alliages ou une céramique du type PZT.

4. Accéléromètre selon l'une des revendications 2 ou 3, **caractérisé en ce que** le dépôt superficiel est constitué de lignes parallèles (34) orientées entre la masse sismique (31) et ledit support (32).

5. Accéléromètre selon l'une quelconque des revendications 2 à 4, **caractérisé en ce que** le dépôt superficiel présentant une anisotropie intrinsèque de contrainte, ce dépôt superficiel est réalisé pour favoriser la direction où s'exerce la précontrainte.

6. Accéléromètre selon l'une des revendications 2 ou 3, **caractérisé en ce que** la couche superficielle (4,5) est fendue par au moins une fente orientée entre la masse sismique et ledit support.

7. Accéléromètre selon la revendication 1, **caractérisé en ce que** les moyens de compensation de la force exercée sur la masse sismique (1) par la pesanteur sont constitués par deux dépôts superficiels (4, 5) que présentent les moyens de liaison mécanique (3), ces dépôts superficiels (4,5) étant réalisés sur deux faces opposées des moyens de liaison mécanique (3), l'un des deux dépôts étant réalisé en une matière induisant une contrainte en tension et l'autre dépôt induisant une contrainte en compression, la combinaison de ces deux dépôts induisant un gradient de contrainte dans l'épaisseur des moyens de liaison mécanique (3) s'opposant à la force exercée sur la masse sismique par la pesanteur.

8. Accéléromètre selon la revendication 7, **caractérisé en ce que** les deux dépôts (4,5) sont constitués de couches minces de molybdène déposées par des techniques différentes de façon à leur conférer des contraintes de signes opposés.

9. Accéléromètre selon l'une quelconque des revendications 2 à 8, **caractérisé en ce que** les moyens de liaison mécanique (3,12) comprenant au moins une poutre, la forme de cette poutre, vue dans la direction selon laquelle s'exerce la force de pesanteur, est triangulaire avec une base solidaire du support (2,11) et le sommet opposé solidaire de la masse sismique (1,10).

10. Accéléromètre selon la revendication 1, **caractérisé en ce que** les moyens de compensation de la force exercée sur la masse sismique (1,10) par la pesanteur sont constitués par une modification superficielle des moyens de liaison mécanique (3,12), cette modification superficielle induisant ladite précontrainte dans les moyens de liaison mécanique (3,12).

11. Accéléromètre selon la revendication 10, **caractérisé en ce que** ladite modification superficielle consiste en un dopage superficiel de la matière constituant les moyens de liaison mécanique (3,12).

12. Accéléromètre selon la revendication 11, **caractérisé en ce que**, les moyens de liaison mécanique (3,12) étant en silicium monocristallin, l'une des faces des moyens de liaison mécanique est dopée par un dopant choisi dans le groupe constitué par le phosphore, le bore, le xénon, le titane, l'arsenic et l'argon.

13. Accéléromètre selon la revendication 11, **caractérisé en ce que** le dopage superficiel est réalisé sur deux faces opposées des moyens de liaison mécanique (3), chacune de ces deux faces étant dopées par des dopants différents, l'un des dopants induisant une contrainte en tension et l'autre induisant une contrainte en compression avec pour résultat d'induire un gradient de contrainte dans l'épaisseur des moyens de liaison mécanique (3) s'opposant à la force exercée sur la masse sismique par la pesanteur.

14. Accéléromètre selon la revendication 13, **caractérisé en ce que**, les moyens de liaison mécanique (3) étant en silicium, l'une des faces des moyens de liaison mécanique (3) est dopée par du bore et l'autre face est dopée par de l'argon.

15. Accéléromètre selon l'une quelconque des revendications 1 à 14, **caractérisé en ce que** les moyens de liaison mécanique (3,12) comprennent au moins une poutre.

16. Accéléromètre selon la revendication 15, **caractérisé en ce que** la masse sismique (10) est supportée par au moins une série de deux poutres (12) disposées en opposition par rapport à la masse sismique (10).

17. Accéléromètre selon la revendication 16, **caractérisé en ce que** la masse sismique (21, 22) est supportée par quatre poutres supérieures, en opposition deux à deux, et par quatre poutres inférieures, en opposition deux à deux.

18. Accéléromètre selon l'une quelconque des revendications 1 à 17, **caractérisé en ce que** la masse sismique (1,10) les moyens de liaison mécanique (3,12) et le support (2,11) constituent un ensemble monolithique.

19. Procédé de fabrication d'un accéléromètre comportant une masse sismique (1,10) reliée à un support (2,11) par des moyens de liaison mécanique (3,12) susceptibles de fléchir sous l'effet d'une force induite dans la masse sismique (1,10) par une accélération à mesurer, des moyens de compensation étant prévus pour compenser la force exercée sur la masse sismique (1,10), par la pesanteur, qui comporte les étapes suivantes :

- masquage de l'une des faces principales d'un substrat (40), ou première face, pour y délimiter la masse sismique (41) et le support,
- gravure du substrat (40) à partir de la première face en direction de la face principale opposée, ou seconde face (43), jusqu'à laisser subsister une membrane (42) entre le fond de la gravure et la seconde face, la gravure délimitant la masse sismique (41) et le support,
- masquage de la seconde face (43) du substrat (40) pour masquer le support, la masse sismique (41) et les moyens de liaison mécanique,
- gravure du substrat (40) à partir de la seconde face pour ouvrir la membrane (42) dans ses parties non masquées,
- traitement superficiel d'au moins une partie des moyens de liaison mécanique pour y induire une précontrainte s'opposant à la force exercée sur la masse sismique (41) par la pesanteur et constituer ainsi lesdits moyens de compensation.

20. Procédé selon la revendication 19, dans lequel ledit traitement superficiel consiste en un dépôt d'une matière présentant une contrainte.

21. Procédé selon la revendication 19, dans lequel ledit traitement superficiel consiste en un dopage.

**EP 0 776 476 B1**

**Patentansprüche**

1. Beschleunigungsmesser mit einer seismischen Masse (1,10), die einer durch eine zu messende Beschleunigung induzierten Kraft ausgesetzt werden kann, wobei die seismische Masse (1,10) mit einem Träger bzw. einer Halterung (2,11) durch mechanische Verbindungsmittel (3,12) verbunden ist, die sich unter der Einwirkung der Kraft verbiegen können, wobei Detektionsmittel vorgesehen sind, um die Beschleunigung anhand der in der seismischen Masse (1,10) induzierten Kraft bestimmen zu können, und Kompensationsmittel vorgesehen sind, um die auf die seismische Masse (1,10) durch die Schwerkraft einwirkende Kraft zu kompensieren bzw. auszugleichen,
   **dadurch gekennzeichnet, daß** die mechanischen Verbindungsmittel (3,12) mindestens einen Teil (4,5,13) aufweisen, der die Kompensationsmittel bildet, indem in den mechanischen Verbindungsmitteln (3,12) eine Vorbelastung induziert wird, die der auf die seismische Masse (1,10) durch die Schwerkraft einwirkenden Kraft entgegenwirkt.

2. Beschleunigungsmesser gemäß Anspruch 1, **dadurch gekennzeichnet, daß** die Kompensationsmittel der auf die seismische Masse (1,10) durch die Schwerkraft einwirkenden Kraft aus einer auf die mechanischen Verbindungsmittel (3) aufgebrachten Oberflächenschicht (4,5) bestehen, die auf einer Fläche bzw. Seite der mechanischen Verbindungsmittel (3) so angebracht ist, daß sie der auf die seismische Masse (1,10) durch die Schwerkraft einwirkenden Kraft entgegenwirkt, und die aus einem Stoff besteht, der die erforderlichen Eigenschaften aufweist, um auf die mechanischen Verbindungsmittel (3) eine Belastung auszuüben.

3. Beschleunigungsmesser gemäß Anspruch 2, **dadurch gekennzeichnet, daß** der eine (Vor-)Belastung ausübende Stoff aus der aus Chrom, Molybdän, Wolfram und ihren Legierungen sowie aus einem keramischen Stoff des PZT-Typs bestehenden Gruppe ausgewählt ist.

4. Beschleunigungsmesser gemäß einem der Ansprüche 2 oder 3, **dadurch gekennzeichnet, daß** die Oberflächenschicht aus parallelen Linien (34) besteht, die zwischen der seismischen Masse (31) und der Halterung (32) ausgerichtet sind.

5. Beschleunigungsmesser gemäß einem der Ansprüche 2 bis 4, **dadurch gekennzeichnet, daß** die Oberflächenschicht eine ihr eigene (Vor)belastungs-Anisotropie aufweist, wobei die Oberflächenschicht so aufgebracht wird, daß die Richtung begünstigt wird, in der die Vorbelastung erfolgt.

6. Beschleunigungsmesser gemäß einem der Ansprüche 2 oder 3, **dadurch gekennzeichnet, daß** die Oberflächenschicht (4,5) durch mindestens einen Spalt, der zwischen der seismischen Masse und der Halterung ausgerichtet ist, gespalten ist.

7. Beschleunigungsmesser gemäß Anspruch 1, **dadurch gekennzeichnet, daß** die Kompensationsmittel der auf die seismische Masse (1,10) durch die Schwerkraft einwirkenden Kraft aus zwei auf die mechanischen Verbindungsmittel (3) aufgebrachten Oberflächenschichten (4,5) bestehen, die auf zwei entgegengesetzten Flächen bzw. Seiten der mechanischen Verbindungsmittel (3) aufgebracht sind, wobei eine der beiden Schichten aus einem Stoff gefertigt ist, der eine Spannungs-Vorbelastung induziert und die andere Schicht eine Kompressions-Vorbelastung induziert, und die Kombination der beiden Schichten ein Belastungsgefälle in der Dicke der mechanischen Verbindungsmittel (3) induziert, das der auf die seismische Masse durch die Schwerkraft einwirkenden Kraft entgegenwirkt.

8. Beschleunigungsmesser gemäß Anspruch 1, **dadurch gekennzeichnet, daß** die beiden Schichten (4,5) aus dünnen Molybdänschichten bestehen, die durch unterschiedliche Techniken derart aufgebracht werden, daß ihnen Belastungen mit entgegengesetzten Vorzeichen verliehen werden.

9. Beschleunigungsmesser gemäß einem der Ansprüche 2 bis 8, **dadurch gekennzeichnet, daß** die mechanischen Verbindungsmittel (3,12) mindestens eine Strebe umfassen, wobei die Form dieser Strebe, in der Richtung betrachtet, in der die Schwerkraft wirkt, dreieckig ist und eine mit der Halterung (2,11) einstückige Basis und einen mit der seismischen Masse (1,10) einstückigen, gegenüberliegenden Scheitel aufweist.

10. Beschleunigungsmesser gemäß Anspruch 1, **dadurch gekennzeichnet, daß** die Kompensationsmittel der auf die seismische Masse (1,10) durch die Schwerkraft einwirkenden Kraft aus einer Oberflächen-Modifikation der mechanischen Verbindungsmittel (3,12) gebildet sind, wobei diese Oberflächen-Modifikation die Vorbelastung in den mechanischen Verbindungsmitteln (3,12) induziert.

9

**11.** Beschleunigungsmesser gemäß Anspruch 10, **dadurch gekennzeichnet, daß** die Oberflächen-Modifikation aus einer Oberflächendotierung des die mechanischen Verbindungsmittel (3,12) bildenden Stoffs besteht.

**12.** Beschleunigungsmesser gemäß Anspruch 11, **dadurch gekennzeichnet, daß** die die mechanischen Verbindungsmittel (3,12) aus monokristallinem Silizium bestehen, wobei eine der Flächen der mechanischen Verbindungsmittel mit einem Dotierungsmittel dotiert ist, das aus der aus Phosphor, Bor, Xenon, Titan, Arsen und Argon bestehenden Gruppe ausgewählt ist.

**13.** Beschleunigungsmesser gemäß Anspruch 11, **dadurch gekennzeichnet, daß** die oberflächliche Dotierung auf zwei entgegengesetzten Flächen der mechanischen Verbindungsmittel (3) ausgeführt ist, wobei jede der beiden Flächen durch unterschiedliche Dotierungsmittel dotiert wird und eines der Dotierungsmittel eine Spannungsbelastung und das andere eine Kompressionsbelastung induziert, wobei im Ergebnis ein Belastungsgefälle in der Dicke der mechanischen Verbindungsmittel (3) induziert wird, das der durch die Schwerkraft auf die seismische Masse einwirkenden Kraft entgegenwirkt.

**14.** Beschleunigungsmesser gemäß Anspruch 11, **dadurch gekennzeichnet, daß** die mechanischen Verbindungsmittel (3) aus Silizium sind, wobei eine der Flächen der mechanischen Verbindungsmittel (3) mit Bor und die andere Fläche mit Argon dotiert ist.

**15.** Beschleunigungsmesser gemäß einem der Ansprüche 1 bis 14, **dadurch gekennzeichnet, daß** die mechanischen Verbindungsmittel (3,12) mindestens eine Strebe umfassen.

**16.** Beschleunigungsmesser gemäß Anspruch 15, **dadurch gekennzeichnet, daß** die seismische Masse (10) von mindestens einer Reihe von zwei Streben (12) getragen bzw. gehaltert ist, die in Bezug auf die seismische Masse (10) dieser gegenüber angeordnet sind.

**17.** Beschleunigungsmesser gemäß Anspruch 16, **dadurch gekennzeichnet, daß** die seismische Masse (21,22) von vier jeweils paarweise gegenüberliegenden oberen Streben und von vier jeweils paarweise gegenüberliegenden unteren Streben getragen bzw. gehalter ist.

**18.** Beschleunigungsmesser gemäß einem der Ansprüche 1 bis 14, **dadurch gekennzeichnet, daß** die seismische Masse (1,10), die mechanischen Verbindungsmittel (3,12) und der Träger bzw. die Halterung (2,11) eine monolithische Einheit bilden.

**19.** Herstellungsverfahren eines Beschleunigungsmessers mit einer seismischen Masse (1,10), die mit einem Träger bzw. einer Halterung (2,11) durch mechanische Verbindungsmittel (3,12) verbunden ist, die sich unter der Einwirkung einer in der seismischen Masse (1,10) induzierten Kraft durch eine zu messende Beschleunigung verbiegen können, wobei Kompensationsmittel vorgesehen sind, um die durch die Schwerkraft auf die seismische Masse (1,10) einwirkende Kraft zu kompensieren, mit folgenden Schritten:

Maskieren bzw. Abdecken einer der Hauptflächen eines Substrats (40) bzw. einer ersten Fläche, um darauf die seismische Masse (41) und den Träger bzw. die Halterung abzugrenzen,
Ätzen des Substrats (40) ausgehend von der ersten Fläche in Richtung auf die entgegengesetzte Hauptfläche bzw zweite Fläche (43), bis eine Membran (42) zwischen dem Ätzgrund und der zweiten Fläche verbleibt, wobei die Ätzung die seismische Masse (41) und die Halterung abgrenzt,
Abdecken der zweiten Fläche (43) des Substrats (40), um die Halterung, die seismische Masse (41) und die mechanischen Verbindungsmittel abzudecken,
Ätzen des Substrats (40) ausgehend von der zweitn Fläche, um die Membran (42) in ihren nicht-abgedeckten Abschnitten zu öffnen,
Oberflächenbehandeln zumindest eines Teils der mechanischen Verbindungsmittel, um in diesen eine Vorbelastung zu induzieren, die der auf die seismische Masse (41) einwirkenden Kraft entgegenwirkt, und so die Kompensationsmittel zu bilden.

**20.** Verfahren gemäß Anspruch 19, bei dem die Oberflächenbehandlung im Aufbringen eines ein Belastung bildenden Stoffs besteht.

**21.** Verfahren gemäß Anspruch 19, bei dem die Oberflächenbehandlung in einer Dotierung besteht.

**EP 0 776 476 B1**

**Claims**

1. Accelerometer comprising a seismic mass (1, 10) capable of being subjected to a force induced by an acceleration to be measured, the seismic mass (1, 10) being fastened to a support (2, 11) by mechanical connecting means (3, 12) capable of bending under the influence of said force, means of detection being provided to determine the acceleration induced in the seismic mass (1, 10) by the force, means of compensation also being provided to compensate for the force exerted on the seismic mass (1, 10) by gravity, **characterized in that** the mechanical connecting means (3, 12) include at least one component (4, 5, 13) constituting said means of compensation while inducing in the mechanical connecting means (3, 12) a prestress that counteracts the force exerted on the seismic mass (1, 10) by gravity.

2. Accelerometer according to claim 1, **characterized in that** the means for compensating for the force exerted on the seismic mass (1, 10) by gravity consists of a surface layer (4, 5) deposited on the mechanical connecting means (3), this surface layer being applied to one surface of the mechanical connecting means (3) in such a way that it counteracts the force exerted on the seismic mass (1) by gravity and consisting of a material having the properties necessary to exert a stress on said mechanical connecting means (3).

3. Accelerometer according to claim 2, **characterized in that** said material providing the stress is selected from the group of materials composed of chromium, molybdenum, tungsten, an alloy thereof or a PZT-type ceramic.

4. Accelerometer according to claim 2 or 3, **characterized in that** the surface deposit is composed of parallel lines (34) oriented between the seismic mass (31) and said support (32).

5. Accelerometer as claimed in any of claims 2 to 4, **characterized in that** the surface deposit has an intrinsic stress anisotropism, the surface deposit being applied to accentuate the direction in which the prestress is exerted.

6. Accelerometer according to claim 2 or 3, **characterized in that** the surface layer (4, 5) is split by at least one slot oriented between the seismic mass and said support.

7. Accelerometer according to claim 1, **characterized in that** the means for compensating for the force exerted on the seismic mass (1) by gravity consist of two surface layers (4, 5) of the mechanical connecting means (3), these surface deposits (4, 5) being applied to opposite surfaces of the mechanical connecting means (3), one of the two deposits consisting of a material that induces a tensile stress and the other deposit inducing a compressive stress, the combination of these two deposits inducing a stress gradient within the mechanical connecting means (3) that counteracts the force exerted on the seismic mass by gravity.

8. Accelerometer according to claim 7, **characterized in that** the two deposits (4, 5) consist of thin layers of molybdenum applied using different techniques such as to cause them to produce contrary stresses.

9. Accelerometer as claimed in any of claims 2 to 8, **characterized in that** the mechanical connecting means (3, 12) comprise at least one strut whose shape is triangular when viewed in the direction of the force of gravity and where the base of the triangle is embedded in the support (2, 11) and where the apex is joined to the seismic mass (1, 10).

10. Accelerometer according to claim 1, **characterized in that** the means for compensating for the force exerted on the seismic mass (1, 10) by gravity consist of a modification to the surface of the mechanical connecting means (3, 12), this surface modification inducing said prestress in the mechanical connecting means (3, 12).

11. Accelerometer according to claim 10, **characterized in that** said surface modification consists of surface doping of the material of the mechanical connecting means (3, 12).

12. Accelerometer according to claim 11, **characterized in that** the mechanical connecting means (3, 12) being made of mono-crystalline silicon, one of the surfaces of the mechanical connecting means is doped using a dopant selected from the group that includes phosphorus, boron, xenon, titanium, arsenic and argon.

13. Accelerometer according to claim 11, **characterized in that** surface doping is carried out on opposite surfaces of the mechanical connecting means (3), each surface being processed with a different dopant, one of which induces an elongation stress while the other induces a compressive stress resulting in inducing a stress gradient within the mechanical connecting means (3) that counteracts the force exerted on the seismic mass by gravity.

**14.** Accelerometer according to claim 13, **characterized in that** the mechanical connecting means (3) being made of silicon, one of the surfaces of the mechanical connecting means (3) is doped using boron and the other with argon.

**15.** Accelerometer as claimed in any of claims 1 to 14, **characterized in that** the mechanical connecting means (3, 12) comprise at least one strut.

**16.** Accelerometer according to claim 15, **characterized in that** the seismic mass (14) is supported by at least a series of two struts (12) arranged in opposing pairs in relation to the seismic mass (10).

**17.** Accelerometer according to claim 16, **characterized in that** the seismic mass (21, 22) is supported by four upper struts arranged in opposing pairs, and by four lower struts arranged in opposing pairs.

**18.** Accelerometer as claimed in any of claims 1 to 17, **characterized in that** the seismic mass (1, 10), the mechanical connecting means (3, 12) and the support (2, 11) constitute a one-piece assembly.

**19.** Process for manufacturing an accelerometer comprising a seismic mass (1, 10) connected to a support (2, 11) by mechanical connecting means (3, 12) capable of bending under the effects of a force induced in the seismic mass (1, 10) by an acceleration to be measured, means of compensation also being provided to compensate for the force exerted on the seismic mass (1, 10) by gravity, which comprises the following steps:

- masking of one of the main surfaces of a substrate (40), or first surface, to delimit the seismic mass (41) and the support,
- engraving the first surface of the substrate (40) in the direction of the other main surface of the substrate, or second surface (43), leaving a membrane (42) between the bottom of the engraving and the second surface, this engraving delimiting the seismic mass (41) and the support,
- masking the second face (43) of the substrate (40) in such a way as to mask the support, the seismic mass (41) and the mechanical connecting means,
- engraving the second surface of the substrate (40) to open unmasked areas of the membrane (42),
- processing at least part of the surface of the mechanical connecting means to induce a prestress counteracting the force exerted on the seismic mass (41) by gravity, thereby constituting said means of compensation.

**20.** Process according to claim 19, wherein said surface processing consists of a deposit of a material that creates a stress.

**21.** Process according to claim 19, wherein said surface processing consists of doping.

$F = Mg$

FIG. 1

FIG. 4

FIG. 5

FIG. 2

FIG. 3